# EUROPÄISCHE PATENTSCHRIFT

(11) **EP 1 691 913 B1**
(45) Veröffentlichungstag und Bekanntmachung des Hinweises auf die Patenterteilung: **25.04.2007**
(21) Anmeldenummer: 04802893.0
(22) Anmeldetag: 07.12.2004
(51) Int. Cl.: B01D 53/70, B01D 53/81, F23G 7/06, F28D 17/00

(54) **VERFAHREN UND VORRICHTUNG ZUR BEHANDLUNG VON SILIZIUMORGANISCHE VERBINDUNGEN ENTHALTENDEN ABGASEN**
METHOD AND APPARATUS FOR THE TREATMENT OF EXHAUST GASES CONTAINING ORGANOSILICON COMPOUNDS
PROCEDE ET DISPOSITIF DE TRAITEMENT DE GAZ D'ECHAPPEMENT CONTENANT DES COMPOSANTS ORGANIQUES DU SILICIUM

(30) Priorität: 09.12.2003 DE 10357696
(43) Veröffentlichungstag der Anmeldung: 23.08.2006
(73) Patentinhaber: Clausthaler Umwelttechnik-Institut Gmbh (Cutec - Institut), 38678 Clausthal-Zellerfeld (DE)
(72) Erfinder: CARLOWITZ, Otto, 38678 Clausthal-Zellerfeld (DE); RÜSKAMP, Bernd, 95447 Bayreuth (DE); NEESE, Olaf, 38678 Clausthal-Zellerfeld (DE); KRIEBISCH, Frank, 23847 Sierksrade (DE)
(74) Vertreter: Kröncke, Rolf
(86) Internationale Anmeldenummer: PCT/DE2004/002685
(87) Internationale Veröffentlichungsnummer: WO 2005/056163

(56) Entgegenhaltungen:
- US-A- 3 870 474
- US-A- 4 535 551
- US-A- 4 940 567
- PATENT ABSTRACTS OF JAPAN Bd. 2002, Nr. 06, 4. Juni 2002 (2002-06-04) & JP 2002 061822 A (CHUGAI RO CO LTD), 28. Februar 2002 (2002-02-28)

## Beschreibung

Die vorliegende Erfindung betrifft ein Verfahren und eine Vorrichtung zur Behandlung von Abgasen mit siliziumorganischen Inhalts- bzw. Begleitstoffen. Genauer betrifft die vorliegende Erfindung ein Verfahren zur regenerativen Nachverbrennung von Abgasen mit siliziumorganischen Inhaltsstoffen, bei dem Schütt-Speichermassen (im folgenden auch als Schütt-Regeneratormassen bezeichnet) periodisch dem System entnommen, gereinigt und wieder zugeführt werden. Weiterhin betrifft die vorliegende Erfindung ein System, das eine automatische Entnahme, Reinigung und Eintrag (Wiederbefüllung) der Schütt-Speichermassen in dem Regenerator erlaubt.

### Stand der Technik

Verfahren und Vorrichtungen zur thermischen Reinigung von sauerstoffhaltigen oder nicht sauerstoffhaltigen Abgasen, wobei die Abgase einem z.B. mittels Erdgas beheizten Brennraum zugeführt und oxidiert werden, sind bekannt. Werden nicht sauerstoffhaltige Abgase eingesetzt, ist die Zufuhr eines zusätzlichen Oxidationsmittels (z.B. Luft) erforderlich. Derartige Vorrichtungen und Verfahren werden meist als thermische Abgasreinigung bzw. thermische Nachverbrennung bezeichnet. Sie dienen z.B. dazu, die mit Lösemitteldämpfen beladene Abluft aus Lackier-, Beschichtungs- oder auch Druckereibetrieben zu reinigen, d.h. die Lösemittel und andere in der Regel organische Substanzen durch Oxidation in die nicht toxischen Verbindungen Kohlendioxid und Wasserdampf zu überführen, wenn eine Rückgewinnung aus technischen bzw. ökonomischen Gründen nicht möglich ist.

Für einen wirtschaftlichen Betrieb einer solchen Vorrichtung ist dabei in den weitaus meisten Fällen eine Abhitzenutzung vorgesehen. Diese kann sowohl zur Erzeugung von Prozesswärme dienen, als auch das Ziel verfolgen, durch eine Vorwärmung des zu behandelnden Abgases den Brennstoffbedarf der Abgasreinigungseinrichtung zu verringern. Extrem hohe Abgasvorwärmtemperaturen und damit niedrige Brennstoffverbräuche lassen sich durch eine sog. regenerative Abgasvorwärmung auf der Basis von zyklisch umschaltbaren keramischen Speicherbetten realisieren. In Abgrenzung zur herkömmlichen Betriebsweise mit einem Abgasvorwärmer auf Rohrbündelbasis (Rekuperator), die allgemein unter dem Begriff TNV-Anlage (Thermische Nachverbrennung) bekannt ist, spricht man hier von einer RNV-Anlage (Regenerative Nachverbrennung) bzw. auch RTO-Anlage (Regenerative thermische Oxidation).

Bei zahlreichen Prozessen (z.B. Regranulierung von Kunststoffen, Kunststoffcompoundierung, Beschichtungsprozesse, Fassrekonditionierung, Aufbereitung von Kunststoffabfällen zur Verwertung, Deponien, MBA-Anlagen) entstehen jedoch Abgase, die unter anderem siliziumorganische Inhaltsstoffe enthalten. In diesem Fall steht bisher einem Einsatz der RNV-Technologie entgegen, dass sich die Regeneratorspeichermassen mit dem Oxidationsprodukt (vorwiegend SiO₂) aus den siliziumorganischen Verbindungen amorph belegen und somit verstopfen. Die periodisch notwendige Wartung bedingt den manuellen Ausbau der üblicherweise monolithisch ausgeführten Speichermassen (Wabenkörper), die einzelne Reinigung (Dampfstrahl) und den manuellen Wiedereinbau. Dieser Aufwand ist sowohl was die Arbeitsbedingungen als auch den Arbeitseinsatz angeht nicht vertretbar. In diesem Zusammenhang schließen bisher alle Hersteller von RNV-Anlagen in ihren technischen Angebotsunterlagen die Behandlung von siliziumorganischen Verbindungen aus.

Die Anhaftungen mit Siliziumdioxid treten jedoch nicht nur bei RNV-Anlagen auf, sondern auch in herkömmlichen thermischen Nachverbrennungsanlagen mit rekuperativer Abluftvorwärmung. Allerdings tritt hier nicht immer ein vollständiges Verstopfen auf, aber auch hier sind Fälle bekannt, bei denen es infolge von Siliziumdioxid-Anhaftungen innerhalb kurzer Zeit zu Betriebsstillständen und Übertemperaturschäden gekommen ist.

Der Begriff "siliziumorganische Verbindungen" wird in der Literatur unter anderem wie folgt definiert: "Im engeren Sinne eine Bezeichnung für solche Verbindungen, die direkte Silizium-Kohlenstoff-Bindungen enthalten. Es sind auch Verbindungen, in denen der Kohlenstoff über Sauerstoff-, Stickstoff- oder Schwefel-Atome an das Silizium geknüpft ist"

Siliziumorganische Verbindungen treten vor allem in folgenden Bereichen auf:
- Silizium-Tenside als Schaumstabilisatoren in Kunststoffen
- Silicone als Gleitmittel für die Kunststoffverarbeitung, in Handschutzsalben, Duftstoffen, Zahnpasta etc.
- Als Siliconelastomere, Siliconemail, Siliconfette, Silicongummi, Siliconharze, Siliconöle, Siliconkautschuk, Silicon-Imprägniermittel, etc.
- Organofunktionelle Silane als Haftvermittler
- Organooxysilane und Siloxane als synthetische Schmiermittel, Vernetzer in Kaltkautschuken etc.

Weitere Verwendungen von siliziumorganischen Verbindungen finden sich als Nahrungszusatzstoffe, spezielle Reinigungsmittel, Papier- und Textilbeschichtungen, Farb-Additive etc.

Die JP-A-2002061822 beschreibt ein Verfahren zur Behandlung von Abgasen, bei dem ein Verstopfen durch Silika und/oder kristallisiertem Silizium verhindert wird. Dieses Dokument sieht eine Brennkammer vor, die mit einem Brenner ausgestattet ist und dieser Brenner wird stets mit einer Temperatur im Bereich von 750 bis 810 °C betrieben.

In der US-A-3870474 wird eine regenerative thermische Oxidationsanlage zur Verminderung von Stickoxid-Emissionen offenbart.

Aus dem Stand der Technik sind somit keine Anlagen und Verfahren bekannt, die unter Zuhilfenahme von regenerativer Abgasvorwärmung ein Behandeln von Abgasen mit siliziumorganischen Verbindungen erlaubt.

Davon ausgehend liegt der Erfindung die Aufgabe zugrunde, ein Verfahren und eine Vorrichtung anzugeben, die den Einsatz der RNV-Technologie und der TNV-Technologie auch bei siliziumorganischen Abgas-Inhaltsstoffen ermöglicht und das Handling der Anhaftungen stark vereinfacht.

### Kurze Beschreibung der Erfindung

Die zugrundeliegende Aufgabe wurde dadurch gelöst, dass zunächst ein Anhaften an die Schütt-Regeneratormassen zugelassen wird und die belegten Schütt-Regeneratormassen periodisch - je nach Erfordernis - entnommen, gereinigt und wieder eingetragen werden. Dieser Schritt kann gegebenenfalls automatisiert durchgeführt werden.

Ein Ziel der vorliegenden Erfindung ist somit die Bereitstellung eines Verfahrens zur Abgasreinigung mit regenerativer Abluftvorwärmung, wobei die Abgase siliziumorganische Inhaltsstoffe enthalten. Dieses Verfahren umfasst, dass die Wärmespeichermasse, umfassend eine Schüttung, das durch Oxidation der siliziumorganischen Verbindungen gebildete Siliziumdioxid als Filter zunächst zurückhält und die Schüttung dem Regenerator bzw. den Regeneratoren periodisch entnommen, aufgearbeitetund dem System wieder zugeführt wird.

Weiterhin betrifft die Erfindung eine Vorrichtung zur thermischen Reinigung eines sauerstoffhaltigen oder nicht sauerstoffhaltigen Abgases, das unter anderem siliziumorganische Verbindungen enthält, dadurch gekennzeichnet, dass sie einem eine Schüttung enthaltenden Regenerator umfasst, wobei der Regenerator einen Schüttgutaustrag und einen Schüttguteintrag umfasst, die mit einer Trennvorrichtung verbunden sind.

### Figurenbeschreibung

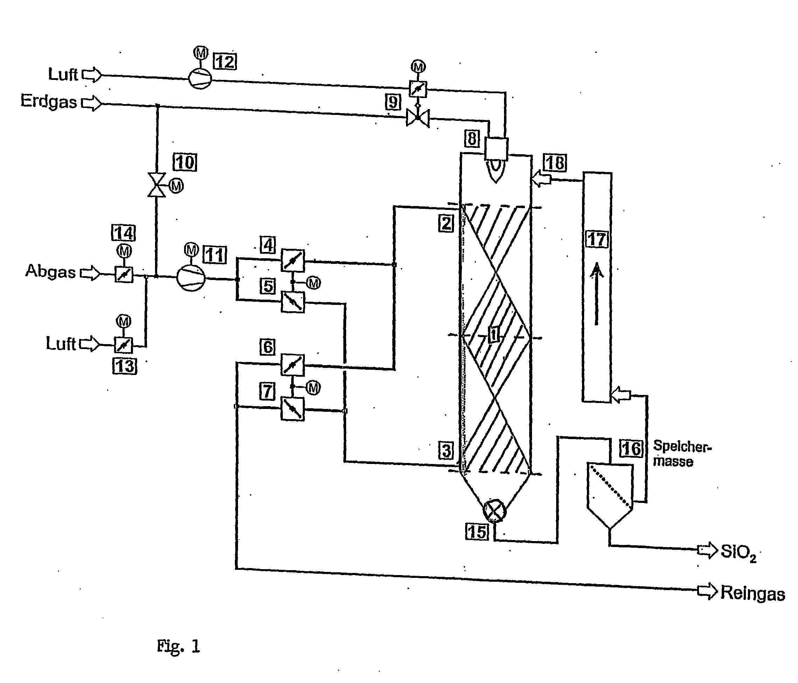

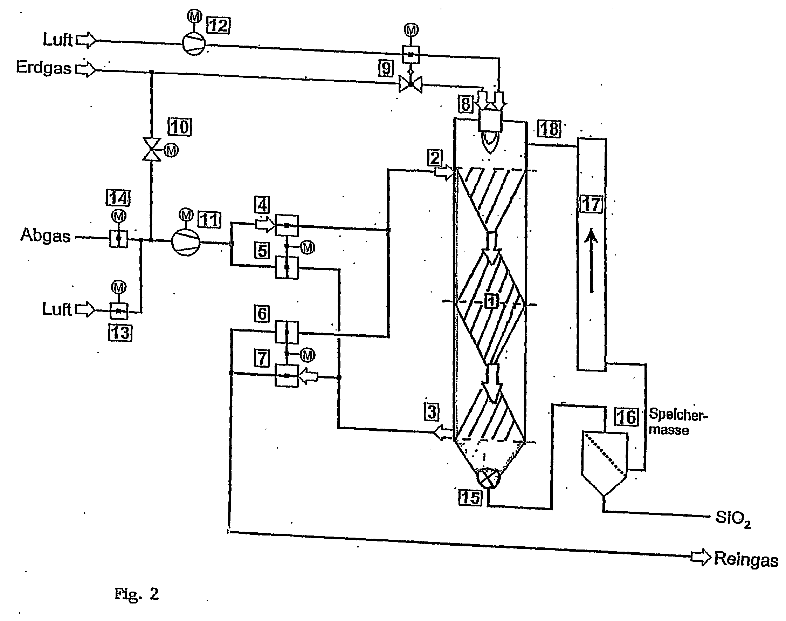

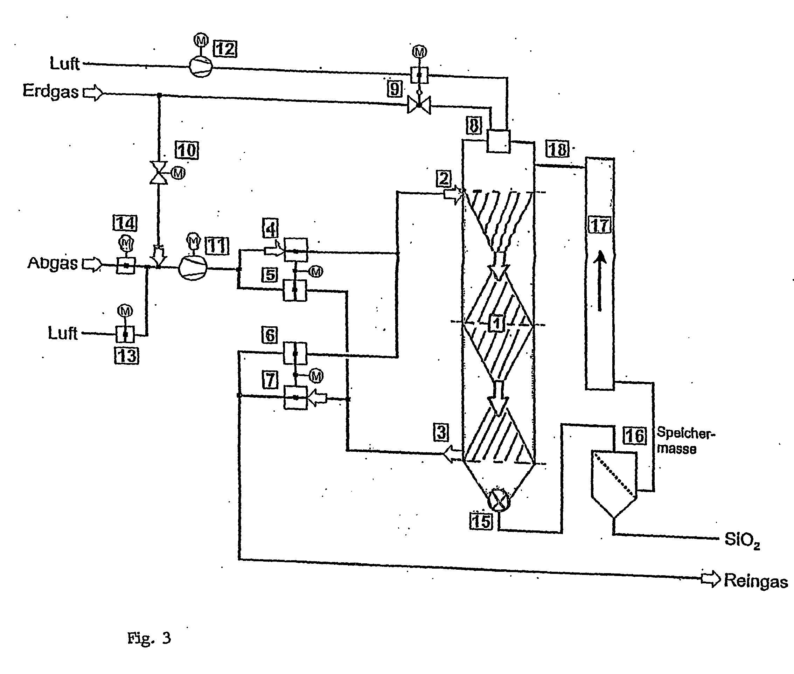

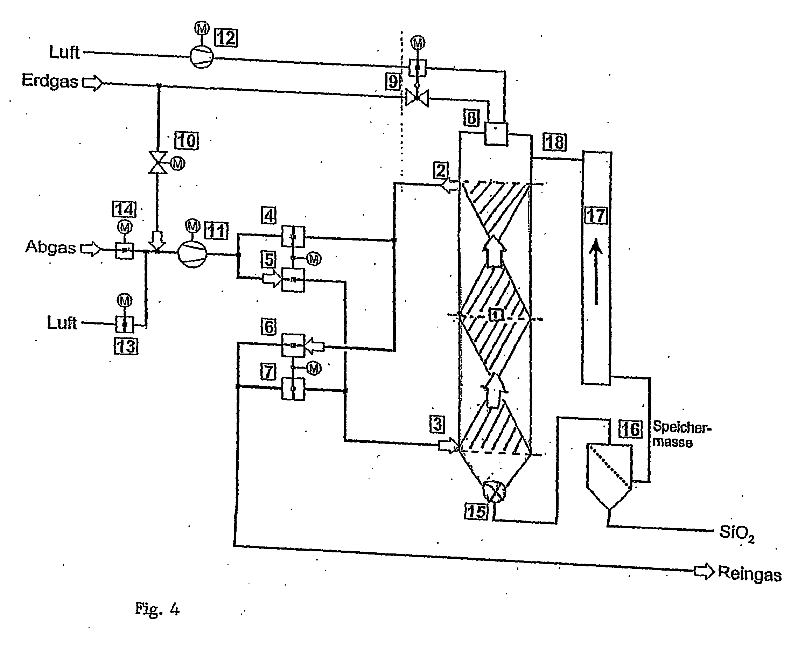

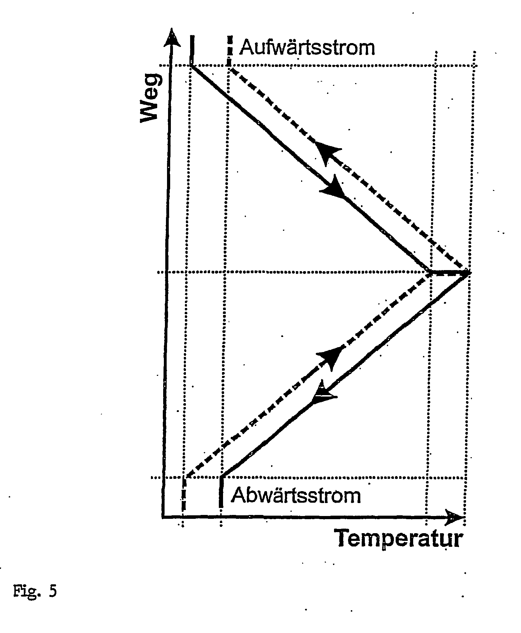

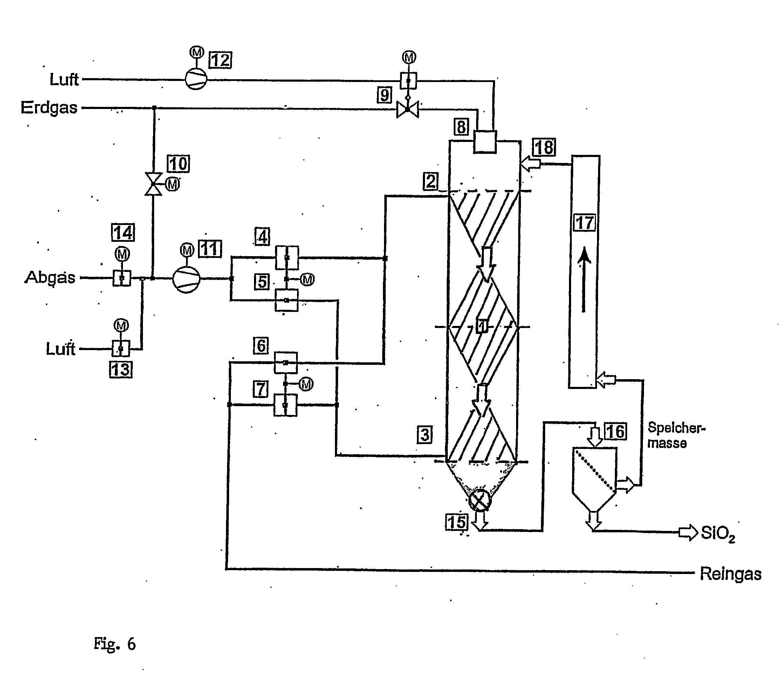

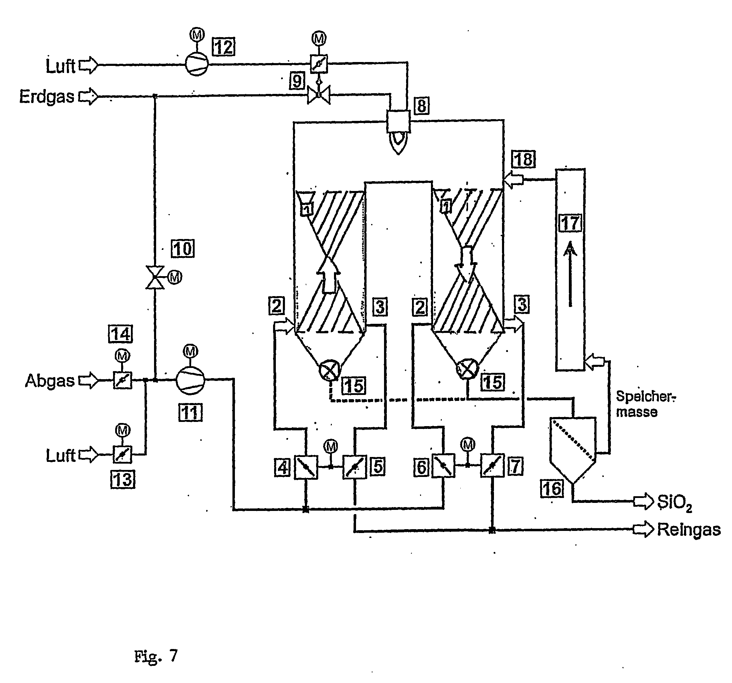

■ **Fig. 1** eine schematische Darstellung, die eine erfindungsgemäße Vorrichtung zur oxidativen Reinigung von Abgasen mit Anteilen siliziumorganischer Verbindungen und regenerativer Abgasvorwärmung zeigt, die als Einturmsystem ausgeführt ist;
■ **Fig. 2** zeigt die Vorrichtung gemäß Fig. 1 in der Betriebsphase Aufheizen;
■ **Fig. 3** zeigt die Vorrichtung gemäß Fig. 1 in der Betriebsphase Abwärtsstrom;
■ **Fig. 4** zeigt die Vorrichtung gemäß Fig. 1 in der Betriebsphase Aufwärtsstrom;
■ **Fig. 5** stellt vereinfacht den Temperaturverlauf im Regenerator einer Vorrichtung gemäß Fig. 1 in den Betriebsphasen Auf- und Abwärtsstrom dar;
■ **Fig. 6** zeigt die Funktion der Bettreinigung der Vorrichtung gemäß Fig. 1;
■ **Fig. 7** zeigt eine Ausführung der Vorrichtung gemäß Fig. 1 als Zweiturmsystem

### Ausführliche Beschreibung der Erfindung

Die vorliegende Erfindung betrifft ein Verfahren zur Behandlung von Abgasen mit siliziumorganischen Inhalts- bzw. Begleitstoffen. Dieses Verfahren ist dadurch gekennzeichnet, dass die Speichermassen des Regenerators einfach aus dem System entnommen werden, in einer Trennvorrichtung gereinigt werden und dem Regenerator wieder zugeführt werden.

Die Speichermasse ist dabei zumindest zu einem Teil eine Schüttung, ein Schüttmaterial, wie z.B. Kugeln, z.B. Voll- oder Hohlkugeln. Das Schüttmaterial kann bevorzugt aus Keramik oder Stahl bestehen. Andere als Schüttmaterial verwendbare Materialien schließen ein: Kieselstein, Blähton, Lava und ähnlich Materialien, die die gleiche Wirkung wie die o.g. aufzeigen. In einer Ausführungsform kann die Speichermasse nur aus Schüttmaterial bestehen. In einer anderen Ausführungsform weist die Speichermasse einen Anteil an Schüttmaterial von mindestens 20%, z. B. 30%, 40% oder 50%, wie 60%, 70%, 80% oder 90% auf.

Der Entnahme-, Reinigungs- und Rückführungsschritt kann dabei automatisch oder halbautomatisch erfolgen. Bevorzugt ist das Verfahren dadurch gekennzeichnet, dass die regenerative Vorwärmung und Abkühlung sowie die Oxidation des Abgases innerhalb einer Regeneratorschüttung erfolgt, die wechselweise im Auf- bzw. Abwärtsstrom betrieben wird. Wenn notwendig, kann ein Spülzyklus mit Hilfe einer Zwischenspeicherung des Abgases durchgeführt werden.

Erfindungsgemäß können in dem Verfahren zwei oder mehr mit einem Trennraum verbundene Regeneratorschüttungen, die wechselweise durchströmt werden, zum Einsatz kommen, wobei jede dieser Regeneratorschüttungen mit einer Vorrichtung zur Entnahme und Eintrag (Wiederbefüllung) der Wärmespeichermasse ausgestattet ist. Die Reinigung bzw. Trennung kann dabei in einer gemeinsamen oder in getrennten Trennvorrichtungen erfolgen.

Die Entnahme, Reinigung und der Eintrag der Wärmespeichermasse kann dabei zeitlich nacheinander in den einzelnen Regeneratoren erfolgen.

In einer bevorzugten Ausführungsform wird der Zeitpunkt der Aufarbeitung der Speichermasse bestimmt, indem der Strömungswiderstand der durchströmenden Abluft gemessen wird. Bei Überschreitung eines maximal zulässigen Druckverlustes der Anlage findet dann eine Wiederaufbereitung der Speichermassen statt. Alternativ kann die Wärmespeichermasse nach bestimmten Zeitabständen, z.B. bei Ruhestand am Wochenende, gereinigt werden.

In einer weiteren Ausführungsform kann dabei der Regenerator nicht vollständig, sondern nur teilweise aus einer entnehmbaren Schüttung bestehen. Dieser Bereich der Schüttung befindet sich dabei in den Abschnitten die als Reaktionszone oder als Brennraum bezeichnet werden. In Bereichen des Abluftregenerators oder Reingasregenerators kann die Speichermasse auch aus herkömmlichen Komponenten, wie Wabenkörpern bestehen.

Weiterhin erfordert das erfindungsgemäße Verfahren keine vollständige regenerative Abgasvorwärmung, vielmehr kann die Abgasvorwärmung auch auf anderem Wege, wie rekuperativem Wege, herbeigeführt werden.

Die gegebenenfalls zusätzlich benötigte Energie kann mit Erdgasbeimischung in das Abgas, elektrisch, über einen Brenner oder durch eine Gaseindüsung in den Brennraum eingebracht werden.

Die erfindungsgemäße Vorrichtung umfasst somit neben dem bekannten Aufbau einer RNV- oder TNV-Anlage bzw. RTO-Anlage einen Austrag, der an jeden Regenerator angebracht ist, durch diesen Austrag kann die Schüttung aus dem Regenerator entnommen werden und einer Trennvorrichtung zugeführt werden. Diese Trennvorrichtung trennt dabei SiO₂-Ablagerungen von dem Schüttgut ab. Zum Beispiel wird durch die Reibung mindestens ein Teil der Anhaftungen losgelöst. Alternativ kann die Ablösung der Ablagerungen durch Druck- oder Abspritzen bzw. andere abtragende Verfahren erfolgen. Die Trennvorrichtung ist dabei eine übliche Trennvorrichtung, wie ein Sieb, die dem Fachmann auf diesem Gebiet wohl bekannt ist.

Die gereinigte Schütt-Speichermasse wird dann wieder, gegebenenfalls über eine Fördereinrichtung, durch einen Eintrag dem Regenerator zugeführt.

Die Vorrichtung kann dabei einen oder mehrere Regeneratoren umfassen. Jeder dieser Regeneratoren weist dabei einen Austrag und einen Eintrag für das Schüttgut auf.

Die Hauptkomponenten einer Ausführungsform der erfindungsgemäßen Vorrichtung sind in Fig. 1 dargestellt. Zentraler Anlagenbestandteil ist dabei der Regeneratorturm, der mit einer Schüttschicht aus Wärmespeichermaterial gefüllt ist. Oben und unten sind jeweils Ein- und Auslässe (2, 3) für das Abgas bzw. Reingas angeordnet, die über ein Klappensystem (4 bis 7) mittels einer zyklischen Umschaltung eine wechselweise Durchströmung des Regeneratorturms von unten nach oben (Aufwärtsstrom) bzw. von oben nach unten (Abwärtsstrom) ermöglichen. Zum Aufheizen der Anlage ist am Regeneratorkopf ein Brenner (8) installiert, der über entsprechende Regelventile (Verbund, 9) mit Erdgas und Luft versorgt wird. Während des Abgasreinigungsbetriebs der Anlage erfolgt die bei niedrigen Beladungen des Abgases erforderliche Energiezufuhr mit Hilfe einer Einspeisung des gasförmigen Zusatzbrennstoffes direkt in das Abgas (10) und der Brenner (8) ist abgeschaltet. Zur Reinigung des Bettmaterials ist dieses über einen Austrag (15) unterhalb des Regenerators entnehmbar und wird nach Durchlaufen einer Trennvorrichtung (16) mittels einer Fördereinrichtung (17) oberhalb der Schüttung wieder eingefüllt (18).

Die unterschiedlichen Betriebsphasen der Vorrichtung sind in Fig. 2 bis 6 schematisch dargestellt. Dabei sind die jeweils aktiven Stoffströme mit Richtungspfeilen gekennzeichnet.

Im Aufheizbetrieb entsprechend Fig. 2 erfolgt zunächst eine Erwärmung des Regeneratorbettes (1) mit Hilfe des Brenners (8). Die Zufuhr der mittels eines Ventilators (12) geförderten Verbrennungsluft wird dabei im Verbund mit dem Erdgas (Regelklappen 9) in Abhängigkeit von der Brennraumtemperatur geregelt. Der Aufheizvorgang endet, wenn der obere Teil des Regeneratorbettes (1) auf eine ausreichende Temperatur erwärmt ist. Danach wird das Temperaturmaximum durch ein spezielles Umschaltprogramm der Klappen (4 bis 7) in die Mitte des Regenerators getrieben. Zu diesem Zweck wird über den Hauptventilator (11) bei geöffneter Klappe (13) und geschlossener Klappe (14) Frischluft durch die Anlage geleitet, die zur Aufrechterhaltung der Temperatur geregelt über Ventil (10) mit Erdgas beaufschlagt wird. Der Brenner (8) ist dabei abgeschaltet.

Nach erfolgter Aufheizphase geht die Anlage in den Normalbetrieb über. Dazu wird die Frischluftzufuhr (13) geschlossen und das mit siliziumorganischen Bestandteilen beladene Abgas (Klappe 14) zugeschaltet. Während des Normalbetriebs lassen sich die Betriebszustände Abwärtsstrom (Fig. 3) und Aufwärtsstrom (Fig. 4) unterscheiden. Die entsprechenden Temperaturverläufe über dem Reaktionsweg sind vereinfacht in Fig.5 dargestellt.

Im Abwärtsstrom wird das Abgas gemäß Fig. 3 über die geöffnete Klappe 4 (Klappe 5 geschlossen) dem Regenerator oben zugeführt (2) und durchströmt diesen nach unten. Das Abgas wird bis etwa zur Mitte des Regenerators aufgeheizt und die darin enthaltenen organischen Stoffe oxidieren (Temperatursprung). Das Oxidationsprodukt SiO₂ der siliziumorganischen Verbindungen bildet dabei amorphe Anhaftungen auf der Wärmespeichermasse und wird so zurückgehalten. Im weiteren Strömungsverlauf gibt das Reingas seine Wärme an die Speichermasse wieder ab, bevor es den Regenerator unten (3) wieder verlässt und über die geöffnete Klappe 7 (Klappe 6 geschlossen) zum Kamin geleitet wird.

Nach einer definierten Zeit erfolgt die Umschaltung auf den Betriebszustand Aufwärtsstrom (Fig. 4). Das Abgas strömt nun über die geöffneten Klappen 5 und 6 (Klappen 4 und 7 geschlossen) von unten (3) nach oben (2) durch den Regenerator. Es entsteht der in Fig. 5 gestrichelt dargestellte Temperaturverlauf, wobei wiederum die Siliziumdioxidanhaftungen etwa im mittleren Teil des Regenerators gewollt auftreten. Die beiden Betriebszustände Abwärts- und Aufwärtsstrom werden in der Folge zyklisch durchlaufen.

Zur Aufrechterhaltung der Reaktionstemperatur wird dem Abgas wiederum Erdgas zugegeben (Regelventil 10) und der Brenner bleibt ausgeschaltet. Zur Vermeidung von Umschaltpeaks der Reingasemissionen an organisch gebundenem Kohlenstoff (C_{org.}) kann auf eine hier aus Gründen der Übersichtlichkeit nicht dargestellte Zwischenspeicherung des Abgases zurückgegriffen werden.

Mit der Zeit bauen sich die Siliziumdioxidanhaftungen innerhalb der keramischen Speichermasse immer mehr auf, so dass ein erhöhter Strömungswiderstand entsteht. Dieser kann mittels einer Differenzdruckmessung erfasst werden, wobei in einer bevorzugten Ausführungsform nach Überschreitung eines maximalen Druckverlustwertes eine Bettreinigung erfolgt. Hierzu wird das Bett in einer Betriebspause (z.B. am Wochenende) gezielt abgekühlt und gemäß Fig. 6 in den Betriebszustand Bettreinigung versetzt. Die Schüttung des Bettmaterial einschließlich der entstandenen Anhaftungen wird über den Austrag (15) entnommen und einer Trennvorrichtung (16) zugeführt, wobei durch die Relativbeyvegungen zwischen z.B. den Füllkörpern (z.B. Voll- oder Hohlkugeln aus Keramik oder Stahl) bereits ein Teil der Anhaftungen abplatzt. Die verbleibenden SiO₂-Anhaftungen werden in der Trennvorrichtung von der Speichermasse abgetrennt, während die gereinigte Speichermasse über eine Fördereinrichtung (17) wieder in den Regenerator gelangt (18). Nach erfolgter Bettreinigung kann die Anlage wieder aufgeheizt werden und in den Abgasreinigungsbetrieb übergehen.

Erfindungswesentlich ist dabei die Verfahrensweise, die aus der Oxidation der siliziumorganischen Verbindungen innerhalb des Regenerators gebildeten Siliziumdioxidanhaftungen zunächst zuzulassen und die Speichermasse, wie die Schüttung, diskontinuierlich je nach Erfordernis (z.B. Differenzdrucküberschreitung) zu entnehmen und der Anlage gereinigt wieder zuzuführen.

Im Rahmen des Erfindungsgedankens sind zahlreiche Abwandlungen und Weiterbildungen möglich, die sich z.B. auf die Austragsvorrichtung die Ausführung der Speichermasse oder die Anordnung der Regeneratoren beziehen.

In Fig. 7 ist beispielsweise eine Variante der erfindungsgemäßen Vorrichtung mit zwei getrennten Regeneratorkammern schematisch dargestellt. Hierbei erfolgt die Vorwärmung des Abgases in einem Regenerator, während der zweite Regenerator mit dem Reingasstrom aufgeheizt wird. Die Oxidation der Schadstoffe im Abgas beginnt innerhalb des ersten Regenerators und der Ausbrand kann unter definiert einstellbaren Bedingungen (Verweilzeit, Temperatur) im oberhalb der Regeneratoren angeordneten Brennraum stattfinden. Die Reinigung des Bettmaterials wird analog zu der Vorgehensweise gemäß Fig. 6 bei beiden Regeneratoren gleichzeitig oder ggf. nacheinander (verschiebbare Förder- und Trenneinrichtung, wie in Fig. 7 dargestellt) durchgeführt. Auch die Installation eines dritten Regenerators zu Realisierung einer Spülung vor Beaufschlagung mit Reingas ist im Rahmen des Erfindungsgedankens möglich.

Darüber hinaus lässt sich die Erfindung auch auf Anhaftungen innerhalb von RNV-Anlagen anwenden, die auf andere Weise als durch Oxidation von siliziumorganischen Verbindungen gebildet wurden. Weiterhin ist die vorliegende Erfindung auch in TNV-Anlagen, in denen Abgase, die siliziumorganische Inhaltsstoffe bzw. Begleitstoffe, behandeln werden, einsetzbar.

## Patentansprüche

1. Verfahren zur thermischen Reinigung eines sauerstoffhaltigen oder nicht sauerstoffhaltigen Abgases, das siliziumorganische Verbindungen enthält, wobei das Abgas mittels Wärmespeichermasse regenerativ vorgewärmt wird, wobei mindestens ein Teil der Wärmespeichermasse eine Schüttung ist, **dadurch gekennzeichnet, dass** es umfasst:
Entnehmen, Reinigen und Einbringen der Wärmespeichermasse-Schüttung zum Entfernen der durch die Oxidation der siliziumorganischen Verbindungen gebildeten Anhaftungen.

2. Verfahren gemäß Anspruch 1, **dadurch gekennzeichnet, dass** das Entnehmen, Reinigen und Einbringen der Wärmespeichermasse-Schüttung automatisch oder halbautomatisch erfolgt.

3. Verfahren gemäß einem der vorherigen Ansprüche, **dadurch gekennzeichnet, dass** die regenerative Vorwärmung und Abkühlung, sowie die Oxidation des Abgases innerhalb einer Regenerator-Schüttung erfolgt, die wechselweise im Auf- bzw. Abwärtsstrom betrieben wird.

4. Verfahren gemäß Anspruch 3, **dadurch gekennzeichnet, dass** weiterhin ein Spülzyklus mit Zwischenspeicherung des Abgases erfolgt.

5. Verfahren gemäß Anspruch 1 oder 2, **dadurch gekennzeichnet, dass** zwei oder mehr mit einem Brennraum verbundene Regenerator-Schüttungen, die wechselweise durchströmt werden, zum Einsatz kommen und jeweils mit einer Vorrichtung zur Entnahme und Eintrag der Wärmespeichermasse, die mit einer Trennvorrichtung verbunden sind, ausgestattet sind.

6. Verfahren nach Anspruch 5, **dadurch gekennzeichnet, dass** die automatisierte Entnahme, Reinigung und Eintrag der Wärmespeichermasse mit einer Vorrichtung zeitlich nacheinander in den einzelnen Regeneratoren erfolgt.

7. Verfahren nach einem der vorherigen Ansprüche, **dadurch gekennzeichnet, dass** die Wärmespeichermasse nach Überschreiten eines maximal zulässigen Druckverlustes der Anlage gereinigt wird.

8. Verfahren nach einem der Ansprüche 1 bis 6, **dadurch gekennzeichnet, dass** die Wärmespeichermasse nach bestimmten Zeitabständen gereinigt wird.

9. Verfahren nach einem der vorherigen Ansprüche, **dadurch gekennzeichnet, dass** die Regeneratoren nicht vollständig, sondern nur teilweise aus einer entnehmbaren Schüttung bestehen.

10. Verfahren nach einem der vorherigen Ansprüche, **dadurch gekennzeichnet, dass** das Schüttgut nicht vollständig, sondern nur teilweise entnommen wird.

11. Verfahren nach einem der vorherigen Ansprüche, **dadurch gekennzeichnet, dass** die Vorwärmung nicht vollständig regenerativ herbeigeführt wird.

12. Verfahren nach einem der vorherigen Ansprüche, **dadurch gekennzeichnet, dass** zusätzlich benötigte Energie mit Hilfe einer Erdgasbeimischung in das Abgas, elektrisch, über einen Brenner oder durch Gaseindüsung eingebracht wird.

13. Vorrichtung zur thermischen Reinigung eines sauerstoffhaltigen oder nicht sauerstoffhaltigen Abgases, das siliziumorganische Verbindungen enthält, umfassend einen Regenerator, wobei das Abgas mittels einer Wärmespeichermasse (1), wobei mindestens ein Teil der Wärmespeichermasse (1) eine Schüttung ist, in dem Regenerator regenerativ vorgewärmt wird, **dadurch gekennzeichnet, dass** sich am Regenerator ein Austrag (15) für die Wärmespeichermasse-Schüttung befindet, dieser Austrag (15) verbunden ist mit einer Trennvorrichtung (16) zur Abtrennung von oxidierten Siliziumanhaftungen; die Trennvorrichtung (16) ist verbunden mit einem Eintrag (18), der es erlaubt, die Schüttung dem Regenerator wiederzuzuführen.

14. Vorrichtung gemäß Anspruch 13, **dadurch gekennzeichnet, dass** zwischen der Trennvorrichtung und dem Eintrag eine Fördereinrichtung (17) angeordnet ist.

15. Vorrichtung gemäß einem der Ansprüche 13 und 14, **dadurch gekennzeichnet, dass** das Schüttmaterial aus Voll- oder Hohlkugeln besteht.

16. Vorrichtung gemäß einem der Ansprüche 13-15, **dadurch gekennzeichnet, dass** sie zwei oder mehr Regeneratoren enthält, die jeweils einen Austrag aufweisen und wobei dieser Austrag mit einer Trennvorrichtung verbunden ist.

17. Verwendung der Vorrichtung gemäß einem der Ansprüche 13 bis 16 zur Behandlung von Abgas, wobei dieses Abgas siliziumorganische Verbindungen enthält.

## Claims

1. Method for the thermal purification of an oxygen-containing or non-oxygen-containing exhaust gas which contains silicon-organic compounds, exhaust gas being preheated regeneratively by means of a heat storage mass, at least part of the heat storage mass being a packing, **characterized in that** it comprises:
extraction, purification and introduction of the heat storage mass packing for the removal of the accretions formed due to the oxidation of the silicon-organic compounds.

2. Method according to Claim 1, **characterized in that** the extraction, purification and introduction of the heat storage mass packing takes place automatically or semi-automatically.

3. Method according to one of the preceding claims, **characterized in that** the regenerative preheating and cooling and the oxidation of the exhaust gas take place within a regenerator packing which is operated alternately in upflow and downflow.

4. Method according to Claim 3, **characterized in that**, furthermore, a scavenging cycle with intermediate storage of the exhaust gas takes place.

5. Method according to Claim 1 or 2, **characterized in that** two or more regenerator packings which are connected to a combustion space and through which the flow passes alternately are used and are equipped in each case with a device for the extraction and introduction of the heat storage mass, the said devices being connected to a separating device.

6. Method according to Claim 5, **characterized in that** the automated extraction, purification and introduction of the heat storage mass by means of a device take place successively in time in the individual regenerators.

7. Method according to one of the preceding claims, **characterized in that** the heat storage mass is purified after a maximum permissible pressure loss of the installation has been overshot.

8. Method according to one of Claims 1 to 6, **characterized in that** the heat storage mass is purified according to defined time intervals.

9. Method according to one of the preceding claims, **characterized in that** the regenerators do not consist completely of an extractable packing, but only partially.

10. Method according to one of the preceding claims, **characterized in that** the packing material is not extracted completely, but only partially.

11. Method according to one of the preceding claims, **characterized in that** preheating is not completely brought about regeneratively.

12. Method according to one of the preceding claims, **characterized in that** energy additionally required is introduced with the aid of the admixing of natural gas into the exhaust gas electrically, via a burner or by gas injection.

13. Device for the thermal purification of an oxygen-containing or non-oxygen-containing exhaust gas which contains silicon-organic compounds, comprising a regenerator, the exhaust gas being preheated regeneratively in the regenerator by means of a heat storage mass (1), at least part of the heat storage mass (1) being a packing, **characterized in that** a discharge (15) for the heat storage mass packing is located on the regenerator, this discharge (15) is connected to a separating device (16) for the separation of oxidized silicon accretions, and the separating device (16) is connected to an infeed (18) which makes it possible to return the packing to the regenerator.

14. Device according to Claim 13, **characterized in that** a conveying means (17) is arranged between the separating device and the infeed.

15. Device according to one of Claims 13 and 14, **characterized in that** the packing material consists of solid or hollow spheres.

16. Device according to one of Claims 13 to 15, **characterized in that** it contains two or more regenerators which each have a discharge, this discharge being connected to a separating device.

17. Use of a device according to one of Claims 13 to 16 for the treatment of exhaust gas, this exhaust gas containing silicon-organic compounds.

## Revendications

1. Procédé pour l'épuration thermique d'un gaz d'échappement contenant de l'oxygène ou ne contenant pas d'oxygène, renfermant des composés organiques du silicium, dans lequel le gaz d'échappement est préchauffé par récupération au moyen d'une masse d'accumulation de chaleur, au moins une partie de la masse d'accumulation de chaleur étant une matière en vrac, **caractérisé en ce que** qu'il comprend : le déchargement, le nettoyage et le chargement de la matière en vrac de la masse d'accumulation de chaleur pour séparer les adhérences formées par oxydation des composés organiques du silicium.

2. Procédé selon la revendication 1, **caractérisé en ce que** le déchargement, le nettoyage et le chargement de la matière en vrac de la masse d'accumulation de chaleur sont réalisés de façon automatique ou semi-automatique.

3. Procédé selon l'une des revendications précédentes, **caractérisé en ce que** le préchauffage par récupération et le refroidissement, ainsi que l'oxydation du gaz d'échappement sont réalisées dans un régénérateur à matière en vrac qui est déplacée alternativement dans le sens du courant vers l'amont ou vers l'aval.

4. Procédé selon la revendication 3, **caractérisé en ce qu'**on réalise en outre un cycle de rinçage avec accumulation intermédiaire du gaz d'échappement.

5. Procédé selon la revendication 1 ou 2, **caractérisé en ce qu'**on met en oeuvre deux ou plusieurs régénérateurs à matière en vrac reliés par un espace de brûlage qui sont alternativement traversés par le courant, chacun d'eux comportant un dispositif pour le déchargement et le chargement de la masse d'accumulation de chaleur qui est relié à un dispositif de séparation.

6. Procédé selon la revendication 5, **caractérisé en ce que** le déchargement, le nettoyage et le chargement automatiques de la masse d'accumulation de chaleur sont réalisés chronologiquement et successivement dans les régénérateurs individuels, au moyen d'un dispositif.

7. Procédé selon l'une des revendications précédentes, **caractérisé en ce que** la masse d'accumulation de chaleur est nettoyée après dépassement d'une chute de pression maximale admissible.

8. Procédé selon l'une des revendications 1 à 6, **caractérisé en ce que** la masse d'accumulation de chaleur est nettoyée après des intervalles de temps déterminées.

9. Procédé selon l'une des revendications précédentes **caractérisé en ce que** les régénérateurs sont constitués, non entièrement, mais seulement partiellement par une matière en vrac déchargeable.

10. Procédé selon l'une des revendications précédente, **caractérisé en ce que** la matière en vrac n'est pas complètement déchargée, mais seulement partiellement.

11. Procédé selon l'une des revendications précédentes, **caractérisé en ce que** le préchauffage n'est pas réalisé complètement par récupération.

12. Procédé selon l'une des revendications précédentes, **caractérisé en ce que** l'énergie supplémentaire nécessaire est apportée au moyen d'un mélange de gaz naturel dans le gaz d'échappement, par de l'énergie électrique, par un brûleur ou par injection de gaz.

13. Dispositif pour épurer thermiquement un gaz d'échappement contenant de l'oxygène ou ne contenant pas d'oxygène et renfermant des composés organiques de silicium comprenant un régénérateur, dans lequel le gaz d'échappement est préchauffé par récupération dans le générateur au moyen d'une masse d'accumulation de chaleur (1), au moins une partie de la masse d'accumulation de chaleur (1) étant en matière en vrac, **caractérisé en ce que** le générateur comporte une sortie (15) pour la matière en vrac de la masse d'accumulation de chaleur, cette sortie (15) étant reliée avec un dispositif de séparation (16) pour séparer les adhérences de silicium oxydées, ce dispositif de séparation (16) étant relié à une entrée (18) qui permet d'acheminer la matière en vrac de nouveau dans le régénérateur.

14. Dispositif selon la revendication 13, **caractérisé en ce qu'**entre le dispositif de séparation et l'entrée est disposé un dispositif de convoyage (17).

15. Dispositif selon l'une des revendications 13 et 14, **caractérisé en ce que** la matière en vrac est constituée de sphères pleines ou creuses.

16. Dispositif selon l'une des revendications 13 à 15, **caractérisé en ce qu'**il comprend deux ou plusieurs régénérateurs qui présentent chacun une sortie, cette sortie étant reliée à un dispositif de séparation.

17. Utilisation du dispositif selon l'une des revendications 13 à 16, pour le traitement des gaz d'échappement, ces gaz d'échappement renfermant des composés organiques de silicium.
